# EUROPÄISCHE PATENTSCHRIFT

(11) **EP 0 594 705 B1**
(45) Veröffentlichungstag und Bekanntmachung des Hinweises auf die Patenterteilung: **06.12.1995**
(21) Anmeldenummer: 92915152.0
(22) Anmeldetag: 09.07.1992
(51) Int. Cl.: A21C 5/04, A21C 7/00

(54) **VORRICHTUNG ZUM WIRKEN VON TEIGSTÜCKEN**
DEVICE FOR SHAPING PORTIONS OF DOUGH
DISPOSITIF DE MISE EN FORME DE MORCEAUX DE PATE

(30) Priorität: 12.07.1991 AT 1414/91
(43) Veröffentlichungstag der Anmeldung: 04.05.1994
(73) Patentinhaber: König, Elisabeth, A-8045 Graz (AT)
(72) Erfinder: KÖNIG, Helmut, verstorben (AT)
(74) Vertreter: Wildhack, Helmut, Dipl.-Ing. Dr.
(86) Internationale Anmeldenummer: AT9200090
(87) Internationale Veröffentlichungsnummer: WO9300819

(56) Entgegenhaltungen:
- AT-A- 341 970

## Beschreibung

Die Erfindung bezieht sich auf eine Vorrichtung zum Wirken, vorzugsweise auch Portionieren, von Teigstücken, die in Aufnahmeöffnungen am Mantel einer schrittweise um eine horizontale Achse durch einen Antrieb gedrehten Trommel in den Bewegungspausen der Trommelbewegung durch ein Wirkwerkzeug gewirkt werden, das relativ zu der ihm gegenüberliegenden Aufnahmeöffnung eine Kreisbewegung vollführt, wobei in den Aufnahmeöffnungen Kolben in radialer Richtung der Trommel verschiebbar geführt sind, deren Vor- bzw. Zurückbewegung durch zumindest eine erste Kurvenbahn gesteuert ist, an der die Kolben, gegebenenfalls unter Vermittlung eines Gestänges, geführt sind, und zumindest eine dieser Kurvenbahnen während des Wirkprozesses durch den Antrieb bewegt wird, und wobei während des Wirkprozesses die Trommel durch Arretierorgane festgehalten ist, die durch den Antrieb während der Vorschubbewegung der Trommel ausgerückt werden.

Derartige Vorrichtungen sind bekannt (z.B. AT-PS 341 970). Zumeist erfolgt auch die Portionierung an der gleichen Trommel durch Eindrücken von Teig mittels eines Schiebers od.dgl. in die stillstehende Aufnahmeöffnung, wobei beim nächsten Trommelvorschubschritt eine Abscherkante des Gehäuses die eigentliche Portionierung bewirkt. Das Wirken der Teigstücke erfolgt somit in den gleichen Aufnahmeöffnungen wie die Portionierung. Beim Wirkvorgang wird das Teigstück durch das Wirkwerkzeug erfaßt und allmählich in eine ballige Form übergeführt. Da diese Form mehr Platz in der Aufnahmeöffnung benötigt als das beim Portioniervorgang in die Aufnahmeöffnung eingedrückte, diese Aufnahmeöffnung völlig ausfüllende Teigvolumen, wird beim Wirkvorgang der in der Aufnahmeöffnung befindliche Kolben durch die Kurvenbahn zurückgezogen. Eine ähnliche Zurückziehung kann auch schon an der Portionierstelle erfolgen, um den einzudrückenden Teig anzusaugen. Nach dem Wirkvorgang erfolgt ein weiterer Trommelschritt und die Teigstücke werden dann an einer Ablegestelle durch Vorschieben der Kolben aus den Aufnahmeöffnungen ausgeworfen. In der Regel sind vier Reihen von Aufnahmeöffnungen, in gleichen Abständen um den Umfang der Trommel verteilt, vorgesehen, so daß jeder Trommelvorschubschritt 90° beträgt.

Untersuchungen haben gezeigt, daß die Qualität des Wirkvorganges um so besser ist, je mehr Zeit für den Wirkvorgang zur Verfügung steht. Diese Zeit ist jedoch bei der eingangs beschriebenen bekannten Vorrichtung dadurch begrenzt, daß der Wirkvorgang nur während der Pausen der Trommelvorschubbewegung erfolgen kann, welche Pausen im wesentlichen gleich lang dauern wie die Trommelbewegungsschritte.

Andere, anders gebaute Vorrichtungen, bewegen das Wirkwerkzeug mit der Trommel mit, um auf diese Weise eine Verlängerung der für den Wirkvorgang zur Verfügung stehenden Zeit zu erzielen. Dies bedingt jedoch einen wesentlich höheren Aufwand und es ist das Ergebnis nicht befriedigend.

Die Erfindung setzt sich zur Aufgabe, eine Vorrichtung der eingangs geschilderten Art so zu verbessern, daß für den Wirkvorgang eine ausreichende Zeit zur Verfügung steht, ohne daß der Aufwand wesentlich vergrößert wird und ohne daß die pro Zeiteinheit ausgeworfene Teigstückanzahl verringert wird. Die Erfindung löst diese Aufgabe dadurch, daß der Antrieb eine weitere Kurvenbahn aufweist, von der über ein Gestänge sowohl der Trommelvorschub als auch die Bewegung der ersten Kurvenbahn zur Steuerung der Kolbenbewegung abgeleitet sind, wobei die Zeitdauer, mit der diese weitere Kurvenbahn auf den Vorschub der Trommel einwirkt, kleiner ist als die Zeitdauer, mit der die weitere Kurvenbahn bei Trommelstillstand auf die erste Kurvenbahn einwirkt. Durch die ungleiche Aufteilung dieser beiden Zeitdauern steht für den Wirkvorgang wesentlich mehr Zeit zur Verfügung als für den Trommelvorschub, welcher an sich nicht viel Zeit benötigt, da er rasch durchgeführt werden kann und lediglich darauf geachtet werden sollte, daß dieser Vorschub nicht stoßweise erfolgt. Der für die weitere Kurvenbahn erforderliche Aufwand ist äußerst gering und es ergibt sich eine übersichtliche Konstruktion trotz des erzielten wesentlichen Vorteiles einer erheblich verlängerten Zeitdauer, die für den Wirkvorgang zur Verfügung steht.

Gemäß einer Weiterbildung der Erfindung ist die Anordnung so getroffen, daß an einer Antriebswelle eines Motors eine Kurbel sitzt, welche die weitere Kurvenbahn bewegt, wobei an dieser weiteren Kurvenbahn das Gestänge geführt ist, das über einen auf der Trommelachse sitzenden, einen Mitnehmer für die Trommel tragenden Schwingarm während der kleineren Zeitdauer sowohl die Trommel, als auch die erste Kurvenbahn bewegt, während der größeren Zeitdauer hingegen nur die erste Kurvenbahn in entgegengesetzter Richtung. Dies ergibt eine besonders einfache Bauweise, wobei durch Gestalt der weiteren Kurvenbahn das Verhältnis zwischen den Zeiten, die für das Wirken bzw. für den Trommelvorschub zur Verfügung stehen, nach Wunsch beeinflußbar ist. Hiebei bestehen im Rahmen der Erfindung zwei besonders günstige Varianten: Einerseits kann erfindungsgemäß die Anordnung so getroffen sein, daß die Kurbel einen Zapfen trägt, der in einem gekrümmten Schlitz eines ortsfest schwenkbar gelagerten Schwenkhebels des Gestänges gleitet, der den mit der ersten Kurvenbahn drehschlüssig verbundenen Schwingarm bewegt. Hier spielt der gekrümmte Schlitz die Rolle der weiteren Kurvenbahn, seine Formgebung ist somit bestimmend für das Verhältnis von Pausen und Bewegungsschritten der Trommel. Anderseits kann erfindungsgemäß die Anordnung so getroffen sein, daß an einer Antriebswelle eines Motors eine Kurvenschleife, vorzugsweise an einer Scheibe, befestigt ist, in der ein mit dem Schwingarm verbundener Zapfen geführt ist. Hier ist es die Kurvenschleife, deren Form die Rolle der weiteren Kurvenbahn spielt.

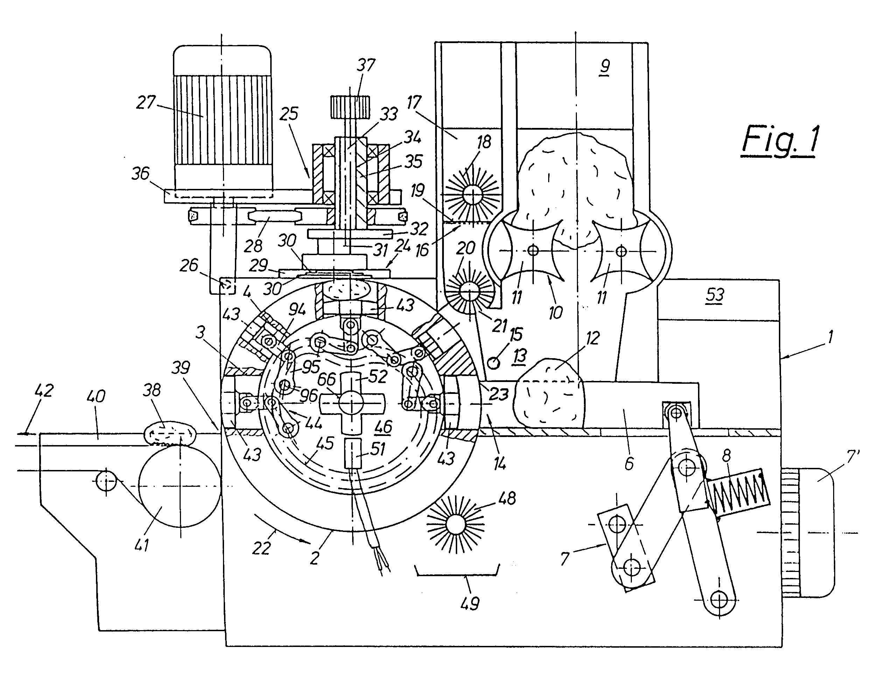

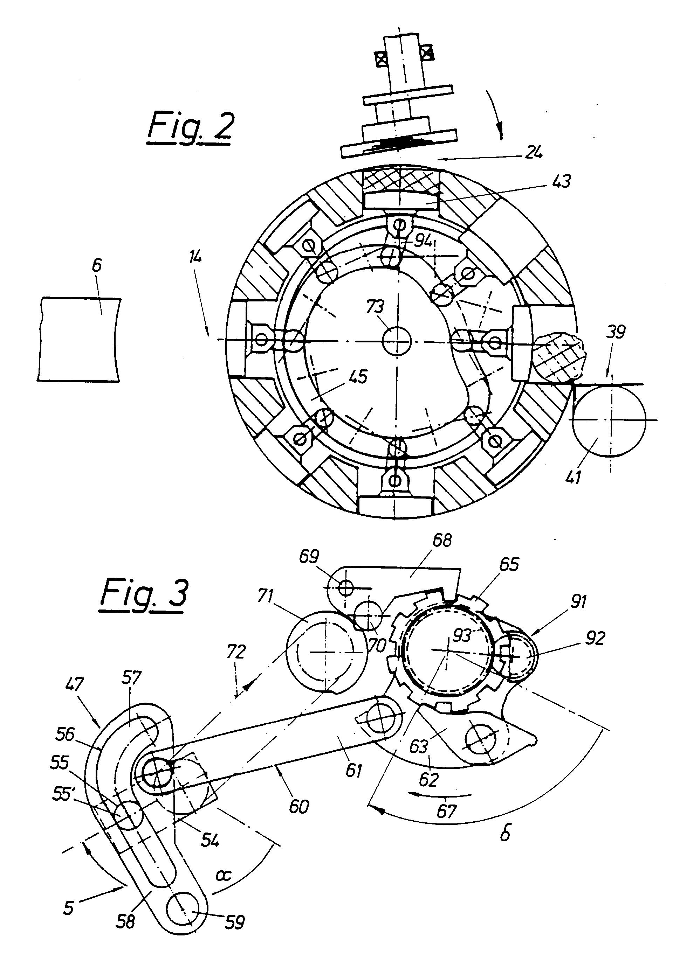

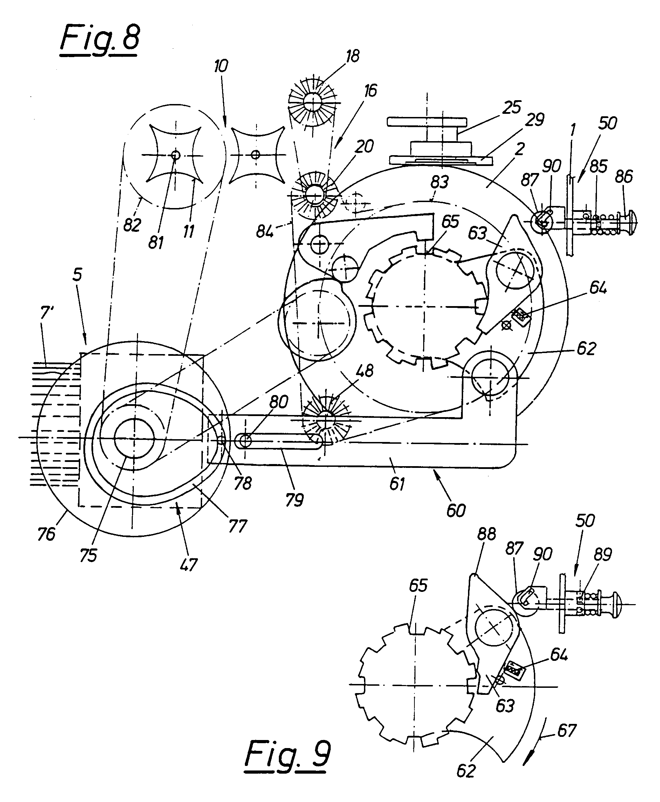

Weitere Kennzeichen und Vorteile der Erfindung ergeben sich aus der Beschreibung von Ausführungsbeispielen des Erfindungsgegenstandes, welche in der Zeichnung schematisch dargestellt sind. Fig.1 zeigt einen Vertikalschnitt durch die Vorrichtung. Die Fig.2,4 und 6 zeigen jeweils einen Vertikalschnitt durch die Trommel in drei verschiedenen Phasen des Wirkvorganges. Die Fig.3,5 und 7 zeigen die zu den Fig.2,4 und 6 zugehörigen Stellungen der Antriebe. Fig.8 zeigt eine Ausführungsvariante der Antriebe und Fig.9 zeigt in Ansicht ein Detail der Fig.8 in einer anderen Betriebsphase.

Bei der Ausführungsform nach Fig.1 ist in einem Gestell 1 eine Trommel 2 um eine horizontale Achse drehbar gelagert. Die Trommel ist an ihrem Umfang mit unterschiedlich großen Aufnahmeöffnungen 3 bzw.4 für den zu wirkenden Teig versehen, wobei die größeren Aufnahmeöffnungen 3 alternierend mit den kleineren Aufnahmeöffnungen 4 über den Umfang der Trommel verteilt in gleichmäßigen Abständen angeordnet sind. Zweckmäßig sind diese Aufnahmeöffnungen in Reihen angeordnet, welche parallel zur Trommelachse verlaufen. Die Trommel wird durch einen Antrieb 5 (Fig.3,7,8) so schrittweise bewegt, daß jeweils eine Aufnahmeöffnung 3 bzw.4 bei jedem Schritt der Trommelbewegung zu einer Portionierstelle 14 gelangt, an welcher der Teig mittels eines Schiebers 6 in die jeweilige Aufnahmeöffnung eingedrückt wird. Der Schieber 6 ist im Gestell 1 verschiebbar gelagert und wird durch einen vom Hauptmotor 7' angetriebenen Kurbelantrieb 7 hin- und herbewegt. In den Kurbelantrieb 7 ist eine Zugfeder 8 eingeschaltet, welche verhindert, daß der Teig bei der Vorwärtsbewegung des Schiebers 6 zu stark gequetscht wird. Der zu portionierende Teig wird in einen Einfüllschacht 9 eingefüllt und mittels der Vorportioniereinrichtung 10 vorportioniert, die aus zwei auf gleicher Höhe um horizontale Achsen im Gegensinn umlaufenden Sternwalzen 11 besteht, welche intermittierend in Abhängigkeit vom Teigvolumen 12 angetrieben sind,welches sich in einer unterhalb der Sternwalzen 11 angeordneten Kammer 13 befindet, aus welcher der Teig 12 durch den Schieber 6 in die Aufnahmeöffnungen eingedrückt wird. Hiebei wird der Teig in der Kammer 13 verdrängt. Steht genügend Teig in der Kammer 13 zur Verfügung, so wird bei dieser Teigverdrängung ein Fühler 15 betätigt, welcher einen Impuls an eine Steuerung für den Antrieb der Sternwalzen abgibt. Dieser Fühler kann z.B. eine Lichtschranke sein oder ein auf die Annäherung feuchter Masse ansprechender Näherungsfühler, z.B. ein kapazitiver Fühler, oder eine in der Kammer 13 oberhalb der Bewegungsbahn des Schiebers 6 schwenkbar gelagerte Stange, die durch den verdrängten Teig hochgehoben wird. Fallen die vom Fühler 15 abgegebenen Impulse - gegebenenfalls für eine einstellbare Anzahl von Hüben des Schiebers 6 - aus, so bewirkt die Steuerung, daß mittels der Sternwalzen 11 Teig in die Kammer 13 entweder für eine bestimmte Zeit nachgefördert wird oder so lange, bis der Fühler 15 wieder anspricht.

Das in der Kammer 13 befindliche Teigvolumen 12 wird von einer Bemehlungsvorrichtung 16 an der Eindrückseite bemehlt. Hiezu läuft in einer Mehlkammer 17 eine Dosierbürste 18 um, welche durch ein Dosiergitter 19, dessen Öffnungsgröße verstellbar ist, Mehl auf eine Verteilerbürste 20 wirft, welche das Mehl durch eine Öffnung 21 in die Kammer 13 schleudert. Der Antrieb dieser Bemehlungsvorrichtung 16, insbesondere ihrer Dosierbürste 18, kann in gleicher Weise vom Fühler 15 gesteuert sein wie der Antrieb der Vorportioniereinrichtung 10.

Der in die jeweilige Aufnahmeöffnung 3 bzw. 4 eingedrückte Teig wird bei der Weiterbewegung der Trommel 2 in Richtung des Pfeiles 22 durch eine Abscherkante 23 abgeschert, wodurch die eigentliche Portionierung erfolgt. Das in der Aufnahmeöffnung befindliche Teigstück gelangt dann nach einer Drehung der Trommel 2 um 90° zu einer Wirkstelle 24, die sich im Bereiche des oberen Trommelscheitels befindet. Dort ist am Gestell 1 eine Wirkvorrichtung 25 um eine horizontale Achse 26 schwenkbar befestigt. Die Wirkvorrichtung 25 ist von einem Motor 27 über einen Keilriementrieb 28 angetrieben und hat ein Wirkwerkzeug 29 in Form einer Platte, die beim Wirkvorgang eine kreisende Bewegung vollführt und an ihrer der Trommel 2 zugewendeten Seite mit stufenförmig abgesetzten Vertiefungen 30 versehen ist. Das Wirkwerkzeug 29 ist drehbar an einem Exzenterzapfen 31 gelagert, der an einer Scheibe 32 befestigt ist, die am unteren Ende eines zweiten Exzenterzapfens 33 sitzt. Dieser weitere Exzenterzapfen 33 ist in eine Aufnahme 34 verdrehbar eingesetzt, die von einer exzentrischen Bohrung einer Antriebswelle 35 gebildet ist, die vom Keilriementrieb 28 angetrieben ist und in einer Halterung 36 gelagert ist, die auch den Motor 27 trägt und um die Achse 26 schwenkbar ist. Der in der Antriebswelle verdrehbare zweite Exzenterzapfen 33 ist hinsichtlich seiner Drehlage arretierbar und trägt an seinem oberen Ende eine Handhabe 37 zur einstellbaren Verstellung. Dadurch wird eine Verstellung des Radius der Kreisbewegung des Wirkwerkzeuges 29 auch bei laufendem Betrieb möglich.

Die fertig gewirkten Teigstücke 38 werden an einer Ablegestelle 39 aus den Aufnahmeöffnungen ausgestoßen und auf ein Förderband 40 abgelegt, das um eine Umlenkrolle 41 geführt ist, die nahe der Trommel 2 angeordnet ist. Um einen sicheren Übergang des auszustoßenden Teigstückes 38 zu gewährleisten, kann das Förderband 40 mit Vorlauf angetrieben sein, d.h., es setzt sich in Richtung des Pfeiles 42 in Bewegung, bevor noch das Teigstück ausgestoßen wird. Diese Ausstoßung wird hervorgerufen durch eine radiale Auswärtsbewegung eines in jeder Aufnahmeöffnung 3,4 geführten Kolbens 43. Alle diese Kolben 43 sind über ein Gestänge 44 an einer Kurvenbahn 45 zumindest einer Kurvenscheibe 46 derart geführt, daß eine Relativverdrehung zumindest einer Kurvenscheibe 46 in Bezug auf die Trommel 2 eine radiale Bewegung des Kolbens 43 in der jeweiligen Aufnahmeöffnung zur Folge hat. Diese Relativverdrehung wird durch einen weiteren, später näher beschriebenen Antrieb 47 (Fig.3) für die Kurvenscheibe 46 hervorgerufen. Die Kurvenbahn 45 ist so geformt, daß die während der Bewegungspausen der schrittweisen Trommelbewegung erfolgende Relativverdrehung der Kurvenscheibe 46 an der Portionierstelle 14 ein Zurückziehen der Kolben 43 bewirkt, was einen Ansaugeffekt auf den zu portionierenden Teig zur Folge hat. An der Wirkstelle 24 erfolgt eine weitere Zurückziehung des Kolbens 43, um dem durch den Wirkvorgang allmählich in eine ballige Form übergeführten Teigstück mehr Platz zu geben. An der Ablagestelle 39 werden die Kolben 43 hingegen bis zum Trommelumfang nach außen geschoben und dadurch die Teigstücke 38 aus den Aufnahmeöffnungen 3,4 ausgeworfen.

An der Trommel gegebenenfalls anhaftende Teigreste werden durch eine Reinigungsbürste 48 abgestreift und auf eine Auffangtassse 49 geworfen.

Es ist jeweils nur eine Größe der Aufnahmeöffnungen 3,4 wirksam. Um von einer Größe auf die andere übergehen zu können, ist eine Umschalteeinrichtung 50 (Fig.8,9) vorgesehen. Die jeweils eingestellte Öffnungsgröße kann mittels eines Fühlers 51 (Fig.1) abgefühlt werden, der mit einem den größeren Aufnahmeöffnungen 3 zugeordneten, auf der Trommelwelle befestigten Geberkreuz 52 zusammenwirkt. Fühlt der Fühler 51 in der Bewegungspause der Trommel 2 einen ihm benachbarten Vorsprung des Geberkreuzes 52, so sind die größeren Aufnahmeöffnungen 3 wirksam, ansonsten die kleineren Aufnahmeöffnungen 4. Die Auswertung der vom Fühler 51 gelieferten Signale kann ebenso wie die Steuerung des Antriebes der Vorportioniereinrichtung 10 und die Steuerung des Antriebes der Bemehlungsvorrichtung 16 durch eine in einem Schaltkasten 53 befindliche Elektronik erfolgen.

Bei der erfindungsgemäßen Vorrichtung ist Vorsorge dafür getroffen, daß die für den Wirkvorgang an der Wirkstelle 24 für jedes Teigstück 38 zur Verfügung stehende Zeit länger ist als die Zeit, welche benötigt wird, um einen Schritt der Trommelbewegung zu vollführen, also z.B. eine Aufnahmeöffnung 3,4 von der Portionierstelle 14 zur Wirkstelle 24 bzw. von dieser zur Ablagestelle 39 zu führen. Um dies zu erzielen, sind die Antriebe 5 für die Bewegung der Trommel 2 und 47 für die Bewegung der Kurvenscheibe 46 entsprechend ausgebildet. Das in den Fig.3 bis 7 dargestellte Ausführungsbeispiel zeigt hiefür eine vom Hauptmotor 7' (Fig.1) über ein Getriebe verdrehte Kurbel 54, die auf einem Zapfen 55' eine drehbare Rolle 55 trägt, die in einem eine weitere Kurvenbahn 56 bildenden gekrümmten Schlitz 57 eines Schwenkhebels 58 geführt ist, der um eine horizontale Achse 59 schwenkbar im Gestell 1 der Vorrichtung gelagert ist und einen Bauteil eines Gestänges 60 bildet, welches für die Bewegung der Trommel 2 bzw. der Kurvenscheibe 46 dient. Dieses Gestänge 60 hat eine Stange 61, deren eines Ende am Schwenkhebel 58 angelenkt ist und deren anderes Ende mit einem Schwingarm 62 gelenkig verbunden ist, der auf die Welle der Trommel 2 drehbar aufgesetzt und mit der Kurvenscheibe 46 drehschlüssig verbunden ist, z.B. mittels einer Welle, die durch Wellenstummel der Trommel 2 hindurchgeführt ist, die an den beiden Seitenschildern der Trommel 2 befestigt sind. Der Schwingarm 62 trägt eine auf ihm schwenkbar gelagerte Klinke 63, die durch eine Feder 64 (Fig.8,9) gegen eine Rastenreihe 65, insbesondere einen Rastenkranz, gedrückt wird, die drehschlüssig mit der Welle 66 (Fig.1) der Trommel 2 verbunden ist. Bei der Vorschubbewegung der Trommel 2 wird über den Antrieb 5 der Schwingarm 62 in Richtung des Pfeiles 67 (Fig.3) verschwenkt, wobei die Klinke 63 in eine Rast der Rastenreihe 65 einrastet und dadurch die Trommel 2 mitnimmt. Während der Bewegungspausen der schrittweisen Trommelbewegung rastet eine weitere Klinke 68, welche um eine Achse 69 im Gestell 1 schwenkbar gelagert ist, in eine Rast der Rastenreihe 65 ein und hält dadurch die Trommel 2 gegen Verdrehung fest. Die Klinke 68 trägt eine auf ihr drehbar gelagerte Rolle 70, die entlang des Umfanges einer Nockenscheibe 71 geführt ist, die vom Hauptmotor 7' bzw. von der Drehwelle der Kurbel 54 über einen Kettentrieb 72 verdreht wird. Die Form des Umfanges der Nockenscheibe 71 bestimmt, wann die Klinke 68 aus der Rastenreihe 65 ausgehoben wird und dadurch die Trommel 2 für eine Verdrehung freigibt.

Der Antrieb 47 für die Verdrehung der in der Trommel 2 angeordneten Kurvenscheiben 46, welche zur Verstellung der Kolben 43 dienen, erfolgt ebenfalls vom Hauptmotor 7' über die Kurbel 54 aus und benützt ebenfalls das Gestänge 60. Die Welle 73 (Fig.2), auf welcher die Kurvenscheiben 46 sitzen, ist drehschlüssig mit dem Schwingarm 62 verbunden. Jede Verschwenkung des Schwingarmes 62, sei es beim Trommelvorschub in Richtung des Pfeiles 67 (Fig.3) oder während der Bewegungspause der Trommelbewegung in der entgegengesetzten Richtung, bewirkt daher eine entsprechende Verschwenkung der Kurvenscheiben 46, von denen in der Zeichnung lediglich eine einzige der Einfachheit halber dargestellt ist.

Die Verhältnisse, insbesondere die Form des gebogenen Schlitzes 57 im Schwenkhebel 58, sind nun so gewählt, daß sich für die Trommelbewegung (Vorschub von Position zu Position) kürzere Zeitspannen ergeben als für die Verdrehung der Kurvenscheiben 46 während des Stillstandes der Trommel 2. Da die Antriebe 5,47 auf der anderen Seite der Trommel 2 liegen als die Betrachterseite der Fig.1, sind die Lagen in den Fig.2 bis 7 zu Fig.1 seitenverkehrt, so daß die Portionierstelle 14 links und die Ablagestelle 39 rechts liegen.

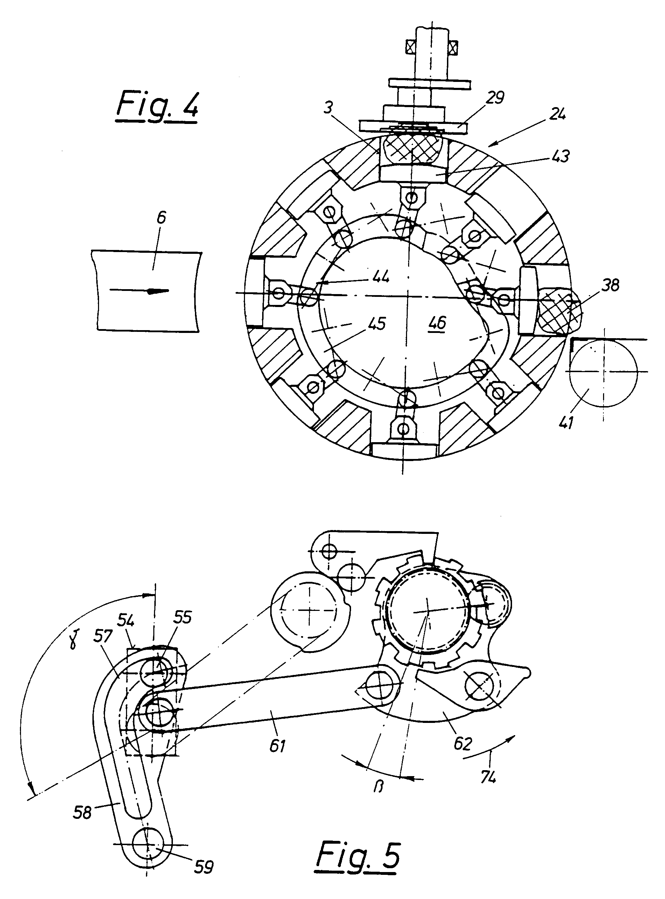

Die Fig.2 und 3 zeigen die Verhältnisse vor Beginn des Wirkvorganges. Es ist ersichtlich, daß während eines Drehwinkels α der Kurbel 54 von etwa 120° der Vorschub der Trommel 2 um 90° erfolgt und zwar harmonisch beschleunigend ohne Stoß, ebenso harmonisch verzögernd. Der an der Wirkstelle 24 (Fig.2) befindliche Kolben 43 befindet sich in einer Mittelstellung, welche dem an der Portionierstelle 14 ausgewogenen Teigvolumen entspricht. Sobald der Vorschub der Trommel 2 beendet ist, erlaubt es die Nockenscheibe 71 der Klinke 68, in die Rastenreihe 65 einzurasten, wodurch die Trommel 2 gegen Verdrehung blockiert wird. Es beginnt nun bei der Weiterdrehung der Kurbel 54 der Wirkvorgang (Fig.4,5). Hiebei wird durch Verschiebung der Stange 61 nach rechts (Fig.5) der Schwingarm 62 in Richtung des Pfeiles 74 verschwenkt, jedoch anfänglich nur um ein geringes Maß (Winkel β), obwohl die Kurbel 54 sich während dieser Zeit um einen erheblich größeren Winkel γ, welcher wieder etwa 120° beträgt, verdreht. Diese relativ geringe Verschwenkung des Schwingarmes 62 hat eine ebenso geringe Verdrehung der Kurvenscheibe 46 zur Folge, wodurch der an der Wirkstelle 24 befindliche Kolben 43 zu Beginn des Wirkvorganges nur verhältnismäßig wenig in seiner Aufnahmeöffnung 3 zurückgezogen wird. Für diese Anfangsphase des Wirkvorganges steht daher etwa ein Drittel der Gesamtzeit des Zyklus zur Verfügung, oder etwa ebensoviel Zeit, wie für den Trommelvorschub (Winkel α, Fig.3).

Die Form des Schlitzes 57 im Schwenkhebel 58 ist abgestimmt auf die Form der Kurvenbahn 45 der in der Trommel 2 liegenden Kurvenscheibe 46, so daß die an der Wirkstelle 24 nötige Rückzugsgeschwindigkeit des Kolbens 43 mit der gewünschten Größe erfolgt.

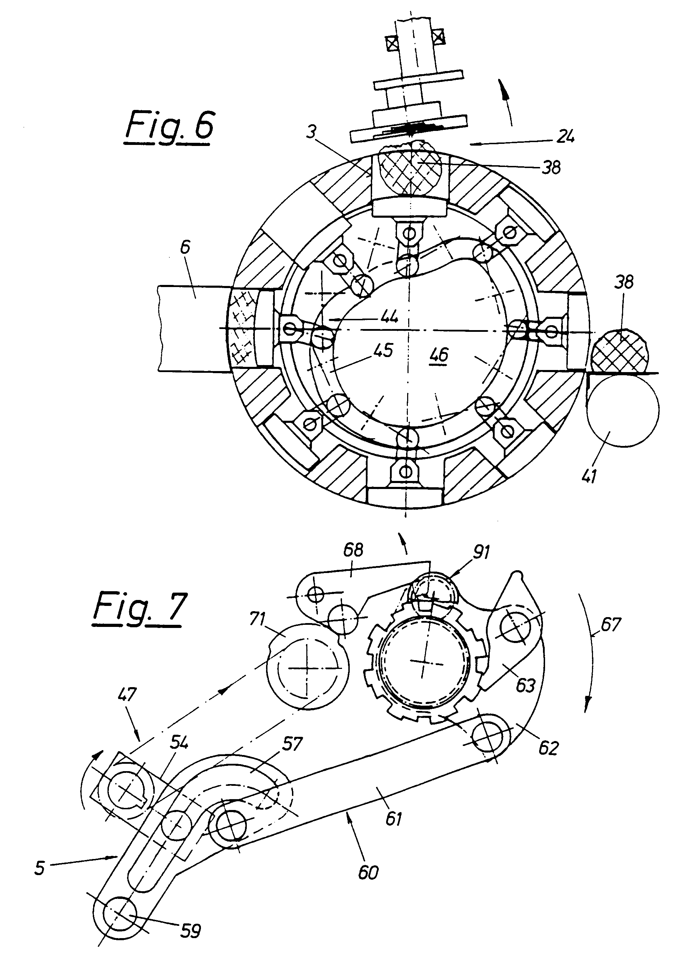

Beim Weiterdrehen der Kurbel 54 (Fig.6,7) erfolgt dann anschließend an den Winkel β (Fig.5) eine beschleunigte Verschwenkung des Schwingarmes 62 und damit eine raschere Verdrehung der Kurvenscheibe 46, was eine raschere Zurückziehung des Kolbens 43 in seiner Aufnahmeöffnung 3 (bzw.4) in der Endphase des Wirkvorganges zur Folge hat. Die Fig.6 und 7 zeigen die Verhältnisse nach Beendigung des Wirkvorganges, wenn die Klinke 68 durch die Nockenscheibe 71 ausgeschwenkt wird, so daß die Trommel 2 für die Verdrehung in Richtung des Pfeiles 67 (Fig.7) freigegeben wird. Der Trommelvorschub erfolgt um 90° (Winkel δ in Fig.3, während der Verdrehung der Kurbel 54 um etwa 120° (Winkel α, Fig.3). Das Spiel beginnt von Neuem.

Wie die Fig.3,5 und 7 zeigen, spiegelt sich das verkürzte Verhältnis der Trommelbewegungszeit im Vergleich zur Wirkzeit in der Form der Nockenscheibe 71 wieder. Ihr erhöhter Nockenteil, welcher eine Ausschwenkung der Klinke 68 zwecks Ermöglichung eines Trommelvorschubes bewirkt, erstreckt sich nur über etwa ein Drittel des Umfanges der Nockenscheibe 71, wogegen zwei Drittel dieses Umfanges der für den Wirkvorgang zur Verfügung stehenden Zeit entsprechen.

Bei der Ausführungsform nach den Fig.8 und 9 trägt die Abtriebswelle 75 des Motors 7' eine Scheibe 76, an der eine endlose Kurvenschleife 77 befestigt ist, in der ein Zapfen 78 geführt ist, der auf der Stange 61 des Gestänges 60 sitzt, mit welchem die Antriebe 5,47 für die Trommel bzw. die innere Kurvenscheibe 46 mit dem Schwingarm 62 verbunden sind. Die Stange 61 hat einen Schlitz 79, in welchem ein am Gestell 1 befestigter Zapfen 80 eingreift, welcher die Stange 61 schwenkbar und verschiebbar hält. Durch die exzentrische Anordnung der Kurvenschleife 77 in Bezug auf die Abtriebswelle 75 werden sinngemäß dieselben Effekte erzielt, wie dies an Hand der Fig.2 bis 7 beschrieben wurde.

In Fig.8 ist auch der Antrieb für die Vorportioniereinrichtung 10 und für die Bemehlungsvorrichtung 16 dargestellt. Auf der Abtriebswelle 75 sitzt ein Kettenrad, das über eine Kette ein auf der Welle 81 einer Sternwalze 11 sitzendes Kettenrad 82 antreibt. Dieses weitere Kettenrad 82 ist mittels einer Magnetkupplung mit der Welle 81 gekuppelt, welche Magnetkupplung vom Fühler 15 (Fig.1) bzw. über die im Schaltkasten 53 angeordnete Elektronik wie beschrieben gesteuert wird. Die beiden Sternwalzen 11 sind mittels Zahnrädern miteinander gekuppelt, so daß sie synchron mit einander entgegengesetzten Drehrichtungen umlaufen.

Für die Bemehlungsvorrichtung 16 ist der Antrieb von der Trommel 2 abgeleitet, und zwar ist mit der Welle der Trommel 2 ein Kettenrad 83 (Fig.8) verbunden, das über eine Kette 84 sowohl die Bemehlungsvorrichtung 16 antreibt als auch die Reinigungsbürste 48. Die beiden Bürstenwalzen 18,20 der Bemehlungsvorrichtung 16 sind miteinander gleichfalls über einen Kettentrieb gekuppelt, wobei das der oberen Bürstenwalze 18 zugeordnete Kettenrad über eine Magnetkupplung mit der dieser Bürstenwalze zugeordneten Welle verbunden ist. Auch diese Magnetkupplung kann vom Fühler 15, gegebenenfalls mit einer einstellbaren Verzögerungszeit, bzw. über die im Schaltkasten 53 befindliche Elektronik gesteuert werden.

Um von den kleineren Aufnahmeöffnungen auf die größeren Aufnahmeöffnungen 3 (Fig.1) bzw. umgekehrt umschalten zu können, ist die Umschalteinrichtung 50 (Fig.8,9) vorgesehen, welche einen im Gestell verschiebbar entgegen der Wirkung einer Feder 85 geführten Stößel 86 aufweist, der an seinem inneren Ende eine Rolle 87 trägt, die mit der am Schwingarm 62 schwenkbar gelagerten Klinke 63 zusammenwirkt. Soll umgeschaltet werden, so wird der Stößel 86 eingedrückt (Fig.9), so daß bei der Vorschubbewegung der Trommel (Pfeil 67) die Rolle 87 am Umfang der Klinke 63 zur Anlage gelangt und dadurch die Klinke 63 entgegen der Wirkung der Feder 64 aushebt. Dadurch wird die Mitnahme der Trommel 2 bei der Verschwenkung des Schwingarmes 62 in Richtung des Pfeiles 67 so lange unterbrochen, bis eine Nase 88 an der Rolle 87 zur Anlage kommt und dadurch den Stößel 86 aus einer Kugelrast 89 drückt, so daß der Stößel in die Ausgangslage (Fig.8) unter der Wirkung der Feder 85 zurückgeführt wird. Die Klinke 63 rastet dann unter Wirkung der Feder 64 in die nächstfolgende Rast der Rastenreihe 65 ein.

Wird der Stößel 86 betätigt, während die inneren Kurvenscheiben 46 relativ zur Trommel 2 verschwenkt werden, die Verschwenkung des Schwingarmes 62 also entgegen der Richtung des Pfeiles 67 erfolgt, dann drückt die Nase 88 der Klinke 63 die Rolle 87 entlang einer Führung 90 zurück, so daß die Rolle 87 ausweichen kann. Sobald der Trommelvorschub einsetzt, gleitet die Rolle 87 wieder in der Führung 90 nach unten in die in Fig.9 dargestellte Lage und kommt daher wie vorhin beschrieben zur Wirkung.

Ferner läßt sich für jede Größe der Aufnahmeöffnungen 3,4 das an der Portionierstelle 14 eingedrückte Teigvolumen variieren. Hiezu ist ein Verstellgetriebe 91 (Fig.3) vorgesehen, welches ein, etwa durch ein Handrad, von außen verstellbares Zahnrad 92 aufweist, das am Schwingarm 62 drehbar gelagert ist. Dieses Zahnrad 92 kämmt mit einem Zahnkranz 93, welcher auf der Welle 73 der Kurvenscheibe 46 sitzt. Dadurch läßt sich die Kurvenscheibe 46 in Bezug auf den Schwingarm 62 drehen, welche Verdrehung eine Zurückziehung bzw. einen Vorschub des Kolbens 43 an der Portionierstelle 14 (Ausgangslage beim Portioniervorgang) zur Folge hat.

Die Kolben 43 können unmittelbar an der Kurvenbahn 45 der Kurvenscheibe 46 geführt sein, etwa mit an der Kolbeninnenseite drehbar gelagerten Rollen. Die in den Zeichnungen dargestellte Ausführungsform sieht jedoch vor, daß an den Kolben angelenkte Laschen 94 (Fig.1,2) an Schwenkhebeln 95 angelenkt sind, die auf Stangen 96 sitzen, die verdrehbar in Bohrungen der Trommelseitenwände gelagert sind. Diese Stangen werden durch auf ihnen sitzende weitere Schwenkhebel verschwenkt, die an ihren Enden Rollen tragen, die in den als Nuten ausgebildeten Kurvenbahnen 45 geführt sind.

## Patentansprüche

1. Vorrichtung zum Wirken, vorzugsweise auch Portionieren, von Teigstücken, die in Aufnahmeöffnungen (3,4) am Mantel einer schrittweise um eine horizontale Achse durch einen Antrieb (5) gedrehten Trommel (2) in den Bewegungspausen der Trommelbewegung durch ein Wirkwerkzeug (29) gewirkt werden, das relativ zu der ihm gegenüberliegenden Aufnahmeöffnung (3,4) eine Kreisbewegung vollführt, wobei in den Aufnahmeöffnungen (3,4) Kolben (43) in radialer Richtung der Trommel (2) verschiebbar geführt sind, deren Vor- bzw. Zurückbewegung durch zumindest eine erste Kurvenbahn (45) gesteuert ist, an der die Kolben (43), gegebenenfalls unter Vermittlung eines Gestänges (44), geführt sind, und zumindest eine dieser Kurvenbahnen (45) während des Wirkprozesses durch den Antrieb (5) bewegt wird, und wobei während des Wirkprozesses die Trommel (2) durch Arretierorgane festgehalten ist, die durch den Antrieb (5) während der Vorschubbewegung der Trommel (2) ausgerückt werden, dadurch gekennzeichnet, daß der Antrieb (5) eine weitere Kurvenbahn (56) aufweist, von der über ein Gestänge (60) sowohl der Vorschub der Trommel (2) als auch die Bewegung der ersten Kurvenbahn (45) zur Steuerung der Kolbenbewegung abgeleitet sind, wobei die Zeitdauer, mit der diese weitere Kurvenbahn (56) einen Vorschub der Trommel (2) bewirkt, kleiner ist als die Zeitdauer, mit der diese weitere Kurvenbahn (56) bei Trommelstillstand auf die erste Kurvenbahn (45) einwirkt.

2. Vorrichtung nach Anspruch 1, dadurch gekennzeichnet, daß an einer Abtriebswelle eines Motors (7') eine Kurbel (54) sitzt, welche die weitere Kurvenbahn (56) bewegt, wobei an dieser Kurvenbahn (56) das Gestänge (60) geführt ist, das über einen auf der Achse der Trommel (2) sitzenden, einen Mitnehmer, z.B. eine Klinke (63), für die Trommel (2) tragenden Schwingarm (62) während der kleineren Zeitdauer sowohl die Trommel (2) als auch die erste Kurvenbahn (45) bewegt, während der größeren Zeitdauer hingegen nur die erste Kurvenbahn (45) in entgegengesetzter Richtung.

3. Vorrichtung nach Anspruch 2, dadurch gekennzeichnet, daß die Kurbel (54) einen, vorzugsweise mit einer Rolle (55) versehenen, Zapfen (55') trägt, der in einem gekrümmten Schlitz (57) eines ortsfest schwenkbaren Schwenkhebels (58) des Gestänges (60) gleitet, welcher Schwenkhebel (58) den mit der ersten Kurvenbahn (45) drehschlüssig verbundenen Schwingarm (62) bewegt.

4. Vorrichtung nach Anspruch 3, dadurch gekennzeichnet, daß der Schwenkhebel (58) mit dem Schwingarm (62) über eine Stange (60) gelenkig verbunden ist.

5. Vorrichtung nach Anspruch 2, dadurch gekennzeichnet, daß an einer Abtriebswelle eines Motors (7') eine Kurvenschleife (77), vorzugsweise an einer Scheibe (76) befestigt ist, in der ein mit dem Schwingarm (62) verbundener Zapfen (78) geführt ist (Fig.8).

6. Vorrichtung nach Anspruch 5, dadurch gekennzeichnet, daß der Zapfen (78) an einer verschwenkbaren Stange (61) befestigt ist, die mit dem Schwingarm (62) gelenkig verbunden ist.

7. Vorrichtung nach einem der Ansprüche 1 bis 6, dadurch gekennzeichnet, daß der Antrieb (5,47) eine dritte Kurvenbahn, vorzugsweise eine Kurvenscheibe (71), aufweist, welche in Abstimmung auf die Zeiten des Trommelvorschubes die Arretierung der Trommel, insbesondere eine Klinke (68), aushebt.

8. Vorrichtung nach einem der Ansprüche 2 bis 7, dadurch gekennzeichnet, daß die als Mitnehmer für die Trommel (2) dienende Klinke (63) mit einer mit der Welle der Trommel (2) drehschlüssig verbundenen Rastenreihe (65) zusammenwirkt und daß vorzugsweise eine Umschalteinrichtung (50) vorhanden ist, mit welcher die Klinke (63) um eine Rast der Rastenreihe (65) verstellbar ist.

9. Vorrichtung nach einem der Ansprüche 7 bis 8, dadurch gekennzeichnet, daß die als Arretierung für die Trommel (2) dienende Klinke (68) mit der Rastenreihe (65) zusammenwirkt.

## Claims

1. An apparatus for kneading, preferably also for portioning, pieces of dough which are kneaded by a kneading tool (29) within receiving openings (3, 4) of the envelope of a drum (2) intermittently rotatable about a horizontal axis by drive means (5) during the interruptions of movement of the drum, which kneading tool carries out a circular motion relatively to the opposite receiving opening (3, 4), with pistons (43) within said receiving openings (3, 4) being slidably guided in radial direction of the drum, whose reciprocating motion is controlled by a first curvilinear path (45) by which the pistons (43) are guided, optionally under transmission of a rod mechanism (44), and at least one of these curvilinear paths (45) is moved during the kneading process by a drive means (5), wherein said drum (2) is locked during said kneading process by arresting members, which are disengaged during-the advancing motion of the drum (2) by said drive means (5), characterized in that said drive means (5) comprise a further curvilinear path (56) from which both the advance of the drum (2) and the movement of said first curvilinear path (45) for controlling said piston motion are derived via a rod mechanism (60), the period of time during which this further curvilinear path (56) effects an advance of the drum (2), being shorter than the period of time during which this further curvilinear-path (56) acts upon said first curvilinear path (45) during stoppage of the drum.

2. Apparatus according to claim 1, characterized in that on an output shaft of a motor (7') a crank is mounted, moving said further curvilinear path (56), the rod mechanism (60) being guided by this curvilinear path (56) and which moves both the drum (2) and the first curvilinear path (45) during said shorter period via a swing arm (62) mounted on the axis of the drum (2) and which supports a dog means, e.g. a pawl (63), for the drum (2), while moving only the first curvilinear path (45) in opposite direction during the longer period.

3. Apparatus according to claim 2, characterized in that the crank (54) supports a trunnion (55'), preferably provided with a roll (55), which trunnion slides within a curvilinear slot (57) of a stationarily pivotable pivot lever (58) of said rod mechanism (60), the pivot lever (58) moving the swing arm (62), which is connected to said first curvilinear path (45) for common rotation.

4. Apparatus according to claim 3, characterized in that the pivot lever (58) is articulated to said swing arm (62) via a rod (60).

5. Apparatus according to claim 2, characterized in that on an output shaft of a motor (7') a guiding cam (77) is mounted, preferably situated on a disk (76), wherein there is guided a trunnion (78) connected to said swing arm (62) (Fig. 8).

6. Apparatus according to claim 5, characterized in that the trunnion (78) is mounted on a pivotable rod (61), articulated to said swing arm (62).

7. Apparatus according to any of claims 1 to 6, characterized in that said drive means (5, 47) comprises a third curvilinear path, preferably a cam disk (71), which withdraws the arrest of said drum, particularly a pawl (68), in coordination with the periods of advancement of the drum.

8. Apparatus according to any of claims 1 to 6, characterized in that the pawl (63) serving as a dog means for the drum (2) cooperates with a series of detent means (65) connected to the shaft of the drum (2) for common rotation, and that preferably a shift mechanism (50 is provided by means of which said pawl (63) is shiftable by one detent means of said series of detent means (65).

9. Apparatus according to any of claims 7 to 8, characterized in that the pawl (63) serving as an arrest for the drum (2) cooperates with said series of detent means (65).

## Revendications

1. Dispositif pour pétrir, de préférence aussi pour portionner, des pièces de pâte, qui sont pétries dans des ouvertures de réception (3, 4) à l'enveloppe d'un tambour (2) tournant de manière intermittente autour d'un axe horizontal à l'aide d'un dispositif d'entraînement (5) pendant les phases de l'arrêt du mouvement du tambour par un outil à pétrir (29), qui accomplit un mouvement circulaire par rapport à l'ouverture de réception (3, 4) opposée; des pistons (43) dans les ouvertures de réception (3, 4) étant guidés en direction radiale du tambour (2), dont le mouvement de va-et-vient est commandé par au moins un premier chemin incurvé (45), par lequel les pistons (43) sont guidés, le cas échéant par translation d'une tringlerie (44), et qu'au moins un de ces chemins incurvés (45) est mis en mouvement pendant le procédé de pétrissage par le dispositif d'entraînement (5), le tambour (2) étant arrêté pendant le procédé de pétrissage par des organes d'arrêt, qui sont déclenchés pendant le mouvement d'avance du tambour (2) par le dispositif d'entraînement (5), charactérisé en ce que le dispositif d'entraînement (5) présente un autre chemin incurvé (56), duquel non seulement l'avance du tambour (2) mais encore le mouvement du premier chemin incurvé (45) pour la commande du mouvement des pistons sont dérivés par une tringlerie (60), le temps, durant lequel l'autre chemin incurvé (56) effectue une avance du tambour (2), étant plus petit que le temps, durant lequel l'autre chemin incurvé (56) agit sur le premier chemin incurvé (45) lors de l'arrêt du tambour.

2. Dispositif selon la revendication 1, charactérisé en ce que sur un arbre de sortie d'un moteur (7') une manivelle (54) est placée qui meut l'autre chemin incurvé (56), la tringlerie (60) étant guidée par ce chemin incurvé (56), et qui met en mouvement non seulement le tambour mais aussi le premier chemin incurvé (45) pendant le temps plus petit par l'intermédiaire d'une biellette (62) placée à l'axe du tambour (2) et portant un entraîneur, par exemple un cliquet (63), pour le tambour (2), tandis que pendant la durée plus grande elle met en mouvement seulement le premier chemin incurvé (45) dans la direction opposée.

3. Dispositif selon la revendication 2, charactérisé en ce que la manivelle (54) porte un tourillon (55'), de préférence pourvu d'un galet, qui glisse dans une fente incurvée (57) d'un levier (58) stationnairement pivotant de la tringlerie (60), ce levier (58) mouvant la biellette (62) accouplée au premier chemin incurvé (45) pour une rotation commune.

4. Dispositif selon la revendication 3, charactérisé en ce que le levier (58) pivotant est articulé à la biellette (62) par l'intermédiaire d'une tige (60).

5. Dispositif selon la revendication 2, charactérisé en ce qu'à un arbre d'un moteur (7'), de préférence à un disque (76), un mécanisme à coulisse (77) est fixé, dans lequel un tourillon (78) relié à la biellette (62) est guidé (Fig. 8).

6. Dispositif selon la revendication 5, charactérisé en ce que le tourillon (78) est fixé à une tige pivotante (61) articulée à la biellette (62).

7. Dispositif selon l'une des revendications 1 à 6, charactérisé en ce que le dispositif d'entraînement (5, 47) comprend un troisième chemin incurvé, de préférence une disque à came (71), qui ôte l'arrêtage du tambour, particulièrement un cliquet (68), en accord avec les temps d'avance du tambour.

8. Dispositif selon l'une des revendications 2 à 7, charactérisé en ce que le cliquet (63) servant comme entraîneur pour le tambour (2) coopère avec une série d'encoches (65) accouplée à l'arbre du tambour (2) pour une rotation commune, et en ce que de préférence un mécanisme de manoeuvre (50) est prévu, avec lequel le cliquet (63) est déplaçable d'une encoche de la série d'encoches (65).

9. Dispositif selon l'une des revendications 7 à 8, charactérisé en ce que le cliquet (68) servant de l'arrêt du tambour (2) coopère avec la série d'encoches (65).
